# EUROPÄISCHE PATENTSCHRIFT

(11) **EP 0 776 576 B1**
(45) Veröffentlichungstag und Bekanntmachung des Hinweises auf die Patenterteilung: **23.09.1998**
(21) Anmeldenummer: 95930503.8
(22) Anmeldetag: 19.08.1995
(51) Int. Cl.: H04N 13/00

(54) **VERFAHREN UND VORRICHTUNG ZUR DARSTELLUNG VON STEREOSKOPISCHEN VIDEOBILDERN AUF EINEM DISPLAY**
METHOD AND DEVICE FOR SHOWING STEREOSCOPIC VIDEO IMAGES ON A DISPLAY
PROCEDE ET DISPOSITIF D'AFFICHAGE D'IMAGES VIDEO STEREOSCOPIQUES SUR UN ECRAN

(30) Priorität: 19.08.1994 CH 2549/94
(43) Veröffentlichungstag der Anmeldung: 04.06.1997
(73) Patentinhaber: Leica Mikroskopie Systeme AG, 9435 Heerbrugg (CH)
(72) Erfinder: STÜTTLER, Herbert, M., A-6830 Rankweil (AT)
(74) Vertreter: Stamer, Harald
(86) Internationale Anmeldenummer: EP9503299
(87) Internationale Veröffentlichungsnummer: WO9606507

(56) Entgegenhaltungen:
- EP-A- 0 279 092
- EP-A- 0 328 357
- WO-A-88/04786
- DE-A- 3 520 917

## Beschreibung

Diese Anmeldung betrifft ein Verfahren und eine Vorrichtung zur Darstellung von stereoskopischen Videobildern auf einem Display, insbesondere von Videobildern, die in Istzeit beim Betrachten eines Objektes durch ein Videostereomikroskop gewonnen werden.

Solche Verfahren sind bekannt und in der Praxis mit einigem Aufwand verbunden, um sicherzustellen, dass die auf einem Monitor wiedergegebenen Stereobilder auch über ausreichende Qualität verfügen. Dadurch, dass pro dargestelltem Stereobild je ein rechtes und ein linkes Teilbild dargestellt werden müssen, ergeben sich verschiedene Bildverarbeitungsprobleme, z.B., dass rechte und linke Teilbilder in der richtigen Reihenfolge auf dem Monitor dargestellt werden. Die DE-C-4134033 gibt beispielsweise in Spalte 4 Zeile 57 bis Spalte 5 Zeile 36 solche Verfahren an.

Mit dem lagerichtigen Darstellen der Teilbilder auf einem Monitor allein ist es jedoch noch nicht getan. So sollten insbesondere auch die Brennweiten der beiden Aufnahmevorrichtungen übereinstimmen und Vorrichtungen vorgesehen sein, die das Betrachten der Teilbilder auf dem Monitor für einen Betrachter ermöglichen. Bei Videostereomikroskopen (Operationsmikroskopen) ist das Problem der fokalen Einstellung dann gering, wenn nur ein Objektiv verwendet wird, durch das beide Videokameras oder auch nur eine Videokamera mit einer geeigneten Aufnahmemöglichkeit für einen rechten und einen linken Bildkanal (z.B. Spiegelstereobasis) gerichtet sind.

Wichtig ist ausserdem noch die Betrachtungsqualität der dargestellten Stereobilder am Monitor, für die ausserdem noch physiologische Faktoren eine Rolle spielen. Zoomobjektive dienen z.B. der optimalen Auswahl und Vergrösserung eines Bildausschnittes; Beleuchtungseinstellungen ermöglichen das augengerechte Beleuchten des Objektes usw.

Ein Problem, das bisher jedoch noch nicht zufriedenstellend gelöst wurde, resultiert aus dem Umstand, dass die menschlichen Augen stets auf eine fixe Stereobasis eingestellt sind, nämlich den festgelegten Augenabstand des betreffenden Menschen.

Insbesondere beim vergrösserten Darstellen von Gegenständen, die z.B. durch ein Mikroskop betrachtet werden, kommt es zu unnatürlichen Stereoeffekten, u.a. bedingt durch die sich bei der Vergrösserung scheinbar verändernde Stereobasis. Im benachbarten Tiefenbereich zur Konvergenzebene spielt dies eher sogar eine positive Rolle, da eine scheinbar vergrösserte Stereobasis einen verbesserten 3-D-Effekt ergibt und die Tiefenwahrnehmung am betrachteten Objekt verbessert ist. Je weiter sich jedoch Objektdetails von der Konvergenzebene entfernt befinden, umso unnatürlicher erscheint das tatsächlich wahrgenommene Bild. Da vor allem in den von der Konvergenzebene entfernt liegenden Bereichen die scheinbare Stereobasis überhaupt nicht mehr mit dem übereinstimmt, was der Betrachter zu sehen gewohnt ist, und dort zudem noch ein verstärkter Unschärfeeindruck entsteht (die Betrachtungsoptik ist ja in der Regel auf die Konvergenzebene fokussiert), führt dies zu einer anstrengenden Mehrbelastung im Sehapparat des Betrachters, vor allem im Gehirn. Diese Mehrbelastung wird manchmal als unangenehm empfunden, manchmal jedoch zunächst gar nicht wahrgenommen. In beiden Fällen können daraus jedoch Kopfweh und Sehschwäche entstehen, wodurch insbesondere die Betrachtungsdauer an einem solchen Mikroskop deutlich reduziert ist. Abgesehen davon sind die betreffenden Bereiche am Objekt dann auch nur besonders schwer zu erkennen.

Der Erfindung liegt demgegenüber die Aufgabe zugrunde, ein einfaches und sicheres Verfahren bzw. eine entsprechende Vorrichtung zu finden, bei dem bzw. bei der die beschriebenen störenden Effekte reduziert oder vermieden werden.

Diese Aufgabe wird insbesondere durch die Verfahrensschritte, wie in Anspruch 1 beschrieben, gelöst und durch weitere verbesserte Verfahrensabläufe bzw. Varianten dazu, wie in den abhängigen Ansprüchen beschrieben, noch spezieller gelöst. Es wird entweder die Wiedergabequalität in diesen betroffenen Bereichen verbessert, oder diese Bereiche werden abgetrennt oder überhaupt am Monitor gar nicht erst dargestellt.

Die Videoteilbilder werden beispielsweise von zwei Bilderfassungsgeräten (es könnte sich auch nur um ein Bilderfassungsgerät mit Spiegelstereobasis handeln) wie bekannt gewonnen. Bevorzugt ist eine Technologie, wie sie in WO-A-9518511, WO-A-9518512 und WO-A-9527226 beschrieben ist. Die Bilder werden sodann in bekannter Weise und nach Bedarf weiterverarbeitet; z.B. wie in WO-A-9518512 beschrieben.

Neu kommt erfindungsgemäss hinzu, dass bildverarbeitungsmässig erfasst wird, welche am Objekt betrachteten Details im unmittelbaren Bereich der Konvergenzebene und welche davon entfernt liegen. Mit der aus dieser Erfassung resultierenden Erkenntnis werden die erfassten Bereiche, in denen mit keiner guten 3-D-Darstellung gerechnet werden darf, einer weiteren Bildverarbeitung unterzogen und entweder
- ausgetastet und als Bildinhalt vollständig gelöscht (0-D-Darstellung);
- durch eine einfarbige Farbfläche ersetzt (1-D-Darstellung);
- auf eine 2-D-Darstellung umgerechnet (es wird dort z.B. nur mehr der Bildinhalt eines Bildkanales wiedergegeben - entweder nur einem Auge zugewandt oder aber auch dadurch, dass der entsprechende Bildinhalt eines Kanals auch über den anderen Kanal übertragen wird, was zu etwa gleicher Bildhelligkeit wie im Bereich der 3-D-Darstellung führt); oder
- durch eine Interpolationsrechnung so umgerechnet, dass die in diesem Bereich wirksame scheinbare Stereobasis verschmälert wird (im Extremfall bis auf Null reduziert = 2-D), um eine weniger extreme und adaptierte 3-D-(oder 2-D-) Darstellung zu erzeugen. Die Umrechnung kann sowohl für den einen Bildkanal als auch gleichzeitig für den anderen Bildkanal gemacht werden.

Die Bildinhalte werden in den einzelnen Darstellungsbereichen X-dimensional, also mit verschiedenen Dimensionen dargestellt.
Zusätzlich oder in Ausnahmefällen auch alternativ zu diesen Massnahmen kann der entsprechende Bildinhalt in seiner Helligkeit gegenüber dem 3-D-Bereich auch reduziert und/oder mit Falschfarben eingefärbt werden. Abgesehen davon mag es auch vorteilhaft sein, die Trennlinie zwischen den beiden Bereichen optisch sichtbar, z.B. als Konturlinie, darzustellen.

Erfindungsgemäss ergibt sich somit für den Betrachter eine Trennung zwischen dem Bereich, in dem er von einer einzigen Stereobasis ausgehend eine 3-D-Wahrnehmung hat -dies ist in der Regel der Bereich, der ihn eigentlich speziell interessiert, und auf den fokussiert ist-, und in einen anderen Bereich, in dem auf die 3-D-Wahrnehmung verzichtet oder auf eine andere scheinbare Stereobasis umgerechnet wird, und/oder wo der Betrachter wenigstens auf den Unterschied zwischen den beiden Bereichen hingewiesen wird.

Bildverarbeitung zur Veränderung von Bildinhalten ist zwar grundsätzlich schon bekannt; so beschreiben beispielsweise SU-A-573907, SU-A-1107144, US-A-4811090 und die DE-C-4029019 Verfahren zur Bildverbesserung (enhancement) allgemeiner Art, wie z.B. Kontrastverbesserung usw. Weiters bekannt ist die Bildverarbeitung zur automatischen Erkennung von bestimmten Objektdetails, z.B. im Bereich der Hämatologie; ebenso bekannt ist die Bildverarbeitung zur Steuerung des Objektivs oder des Mikroskops, wie z.B. beschrieben in JP-A-6098787, EP-A1-229581 und EP-A2-336608; darüber hinaus ist bekannt, durch Bildverarbeitung stereoskopische Teilbilder zueinander zu verschieben bzw. deren Sterobasis in Abhängigkeit von der Monitorgrösse virtuell zu verändern, um dadurch die Konvergenzebene virtuell in andere Bereiche zu verlegen, oder die 3-D-Wiedergabe allgemein zu verbessern, wie z.B. beschrieben in US-A-3818125, US-A-4875034 und WO-9213427.

Die vollständige Aufteilung des Bildes nach den obigen Gesichtspunkten in wenigstens 2 Teilbereiche ist hingegen neu und bringt die erfindungsgemässen Vorteile.

Die Zuordnung der Bereiche der Videoteilbilder vor der Wiedergabe des aufgezeichneten Videosignals kann durch verschiedene Verfahren bewerkstelligt werden; die Erfindung ist insofern nicht auf die dargestellten Ausführungsbeispiele eingeschränkt.

Entsprechende Verfahren - vor allem zur Erkennung der Lage der Fokalebene und der Konvergenzebene - sind dem Fachmann bekannt und zum Teil in den oben erwähnten Vorveröffentlichungen auch angegeben. Entsprechende Passagen gelten als im Rahmen dieser Offenbarung liegend. Die oben erwähnten Schweizer Patentgesuche gelten vor allem mit ihren Figuren und den zugehörenden Beschreibungsteilen als ebenso hierin geoffenbart, zumal sich unter Anwendung der dort gegebenen Lehren bevorzugte Ausführungsbeispiele dieser Erfindung realisieren lassen.

Für das Wesen der Erfindung ist es nicht bedeutend, ob die verarbeiteten Videobilder aus einer On-line-Aufzeichnung, gegebenenfalls aus einem Videorecorder stammen, oder überhaupt computergeneriert sind. Bevorzugt werden jedenfalls sämtliche elektronischen Bauelemente so gewählt, dass eine Ist-Zeit-Verarbeitung (Realtime-processing) möglich ist. In jedem Fall bevorzugt ist eine Vollbilddarstellung (progressive scan) mit einer Refreshrate von 100-200 Hz.

Weitere Einzelheiten der Erfindung sind aus den Ansprüchen, den Figuren und zugehörigen Beschreibungsteilen zu entnehmen. Die Figuren zeigen dabei:
Fig.1 ein Display einer erfindungsgemässen Vorrichtung, das mit einer Bildverarbeitungsvorrichtung (Bildrechner) verbunden ist;
Fig.2 einen symbolischen Aufbau mit einem solchen Bildrechner;
Fig.3 eine symbolische Darstellung der Einträge in den beiden CCD's zweier Videokameras, die ein Würfelkreuz auf einer Kugelkalotte gemäss Fig. 4 betrachten;
Fig.4 einen symbolischen Aufbau mit einem Würfelkreuz auf einer Kugelkalotte im Fokus von zwei Stereovide.okameras, wobei diese symmetrisch zum vertikalen Balken des Kreuzes angeordnet sind,
Fig.5 einen ähnlichen Aufbau mit der Detaildarstellung von Winkeldimensionen und
Fig.6 einen Symbolaufbau der Schaltungsanordnung im Bildrechner.

Gleiche Bezugszeichen bedeuten gleiche Bauteile. Gleiche Bezugszeichen mit unterschiedlichen Indizes bedeuten ähnliche Bauteile.

### BEGRIFFSDEFINITIONEN

Im Sinne der Erfindung bedeuten:
Ein stereoskopisches Videobild zwei zusammengehörende Teilbilder eines linken und rechten Bildkanales, wobei die Teilbilder wenigstens ein Video-Halbbild (HB) aufweisen, gegebenenfalls jedoch als Vollbild ausgebildet sind, in dem sie aus einem zusammengehörenden Paar (VB) von zwei Halbbildern (HB) aufgebaut sind. Ein solches Paar (VB) kann im Sinne der Erfindung auch aus zwei aufeinanderfolgenden (interlaced) Halbbildern (HB) oder aus zwei gleichzeitig vorhandenen und somit nicht mehr aufgetrennten Halbbildern (progressive scan) bestehen. Interpolierte Teilbilder sind Teilbilder, die durch rechnerische Auswertung von vorhandener Bildinformation aus einem Teilbild oder einem Ausschnitt daraus gewonnen wurden.

Die Buchstaben A und B stehen für den linken bzw. rechten Bildkanal eines Video-Stereobildes. /T steht für einen Ausschnitt eines Bildes oder eines Teilbildes.

### BEZUGSZEICHENLISTE

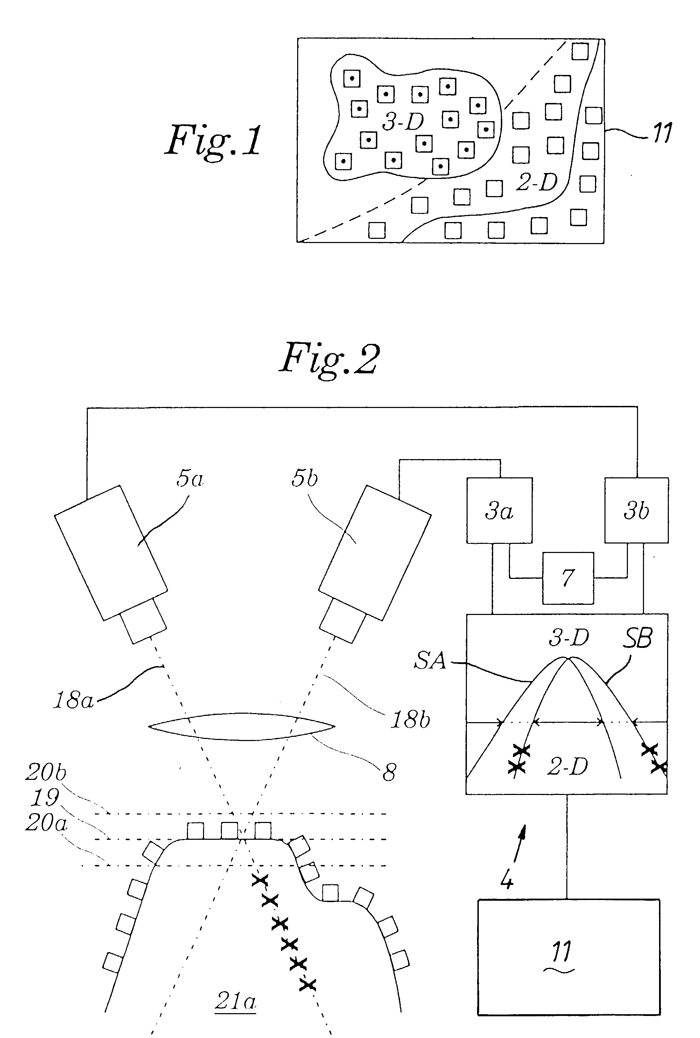

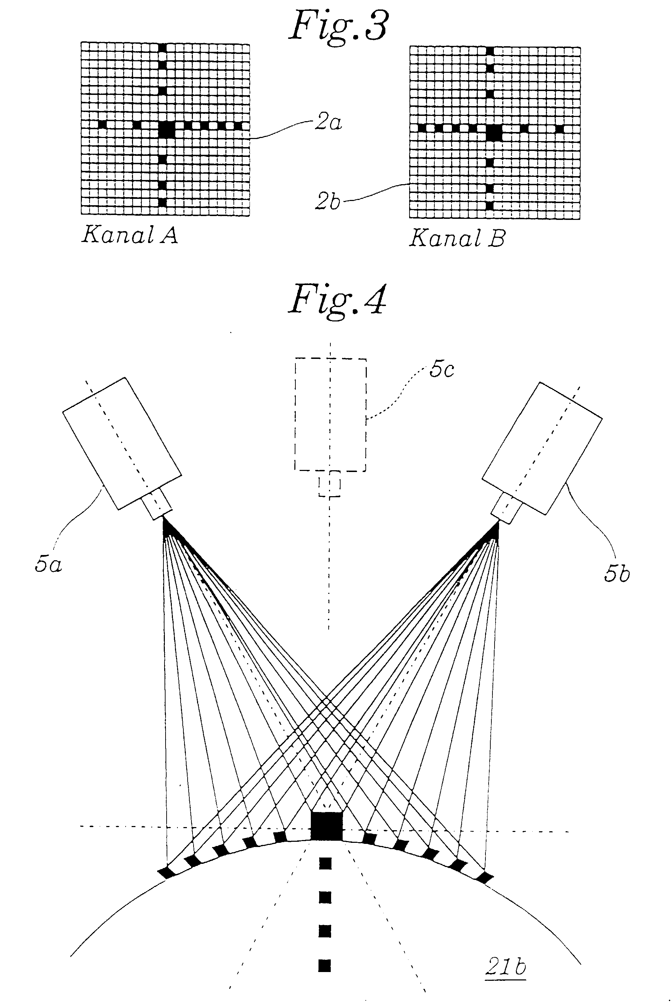

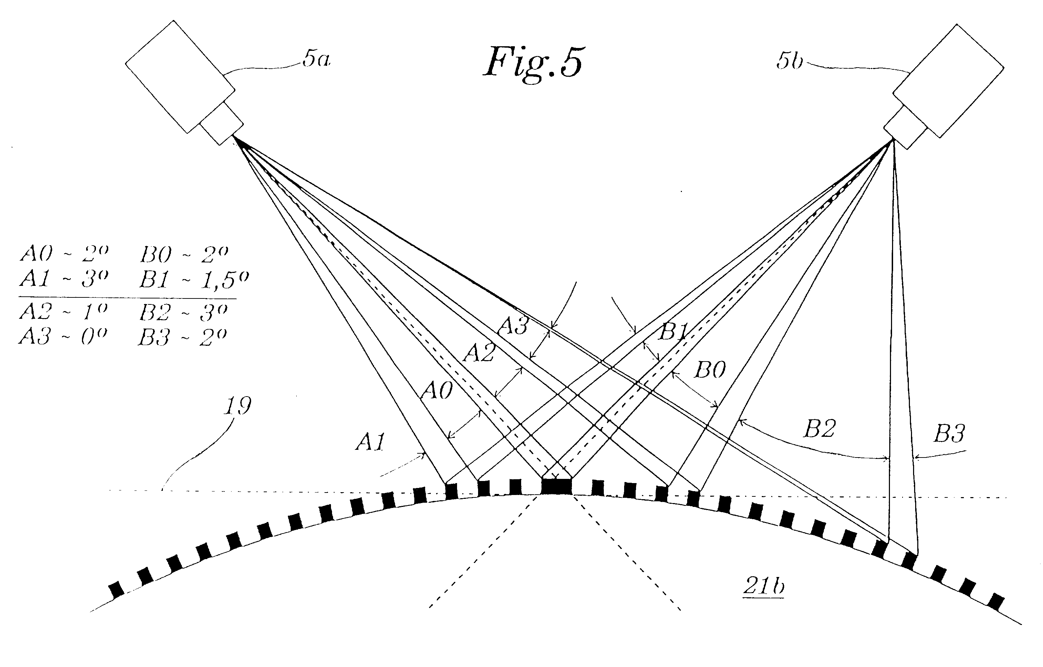

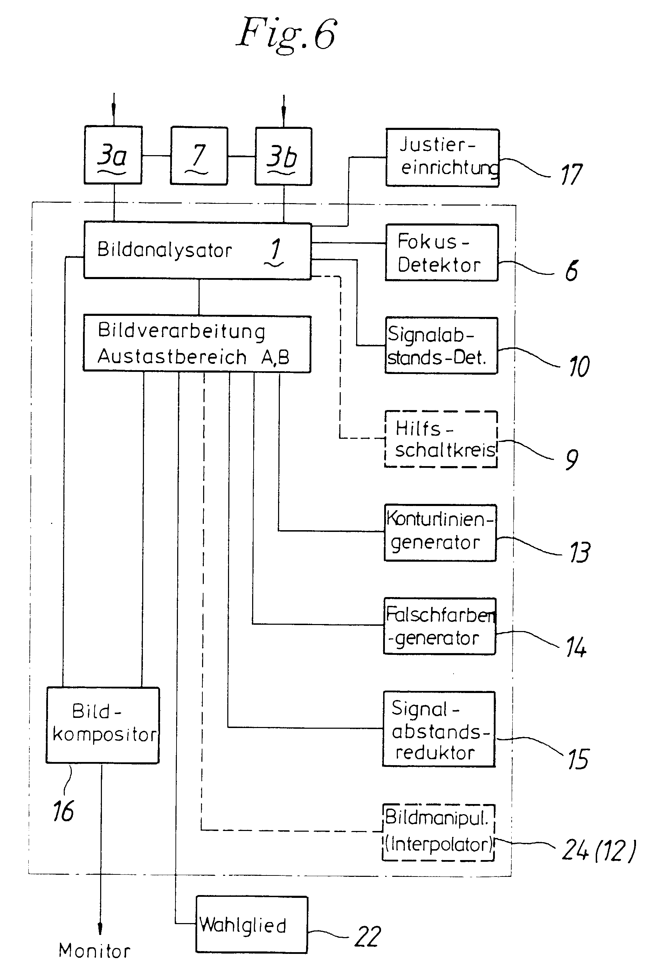

1 Bildanalysator (Fig.6); darunter fallen Mikroprozessoren, die aus der digitalen Bildinformation, z.B. aus der Kameraelektronik 3a,b, die Lage einzelner Bilddetails am betrachteten Objekt 21a,b (Fig.2,4,5) ermitteln. Sie können vom Bedienpersonal nach bestimmten Kriterien justiert werden, z.B. um willkürlich den Nahbereich 20a-20b der Konvergenzebene 19 einzustellen. Sie kooperieren mit verschiedenen Messschaltkreisen 6, 10, 17. Am Ausgang von 1 liegt einerseits die Bildinformation des 3-D-Bereiches an, andererseits die noch abzuwandelnde Bildinformation des Austastbereiches.
2a,b symbolisches CCD (Fig.3) einer Kamera; in Fig.3 ist symbolisch die Abbildung der Kameras 5a,b aus Fig.5 zu sehen. Aufgrund deren symmetrischer Anordnung ist der vertikale Würfelbalken des Kreuzes spiegelsymmetrisch zum Bild des horizontalen Würfelbalkens.
3a,b Kameraelektronik (Fig.2); ist insbesondere mit einem Framegrabber (darunter fallen alle elektronischen Schaltungen, die Signale eines Video-Voll- oder Halbbildes in digital weiterverarbeitbare Signale umwandeln und für die Darstellung auf einem Computermonitor aufbereiten) verbunden. Im Sinne dieser Erfindung beinhaltet die Kameraelektronik 3a,b auch alle Elemente, die nötig sind, um die gewünschten Bildformate herzustellen.
4 Bildrechner (Fig.2), Vorrichtung zur Erfassung von Istzuständen auf dem betrachteten Objekt 21 in Zusammenhang mit der Betrachtungsoptik (z.B. Erfassen der Fokalebene und der Konvergenzebene 19 sowie von Entfernungen von Details am Objekt zu diesen Ebenen), z.B durch Untersuchung des Pixelinhaltes auf den CCD's und parametergesteuertes Umrechnen von bestehenden Bildsignalen zur erfindungsgemäss verbesserten Darstellung auf einem Monitor 11.
5a,b Bilderfassungseinrichtung (Fig.2); darunter fallen Still- oder Bewegt-Videokameras, jedwede CCD- oder sonstige opto-elektronische Array-Schaltungen usw.; in den Ausführungsbeispielen sind jeweils zwei Kameras 5a,b symbolisch dargestellt. Die Erfindung ist darauf jedoch nicht eingeschränkt. Selbstverständlich fallen in den Rahmen der Erfindung auch Varianten mit nur einer Kamera mit nur einem CCD, auf das über eine z.B. durch Spiegel geschaffene Stereobasis abwechselnd Bildsignale des linken und rechten Bildkanales geliefert werden. Ebenso erfolgt durch die symbolische Darstellung auch keine Einschränkung auf Life-Aufnahmen; im Sinne der Erfindung können die beiden Kameras 5a und 5b auch durch entsprechende Signalausgänge aus einem Stereovideorecorder, aus einem Computer zur Generierung von Stereobildern o.dgl. ersetzt sein.
6 Fokusdetektor (Fig.6); darunter fallen alle elektronischen Schaltkreise, die aus der Bildanalyse auf die Lage des eingestellten Fokus in bezug auf das Objekt 21 schliessen; in der Regel bedeutet die Erkennung der Lage des Fokus gleichzeitig die Erkennung der Lage der Konvergenzebene 19, wenn diese durch optische Massnahmen gekoppelt sind. Gegebenenfalls kann mit diesem Schaltkreis auch die Erkennung des Tiefenschärfebereiches an sich erfolgen, der dann gegebenenfalls als 3-D-Darstellungsgrenzbereich 20a - 20b definiert wird.
7 Kamerasynchronisationseinrichtung (Fig.2); darunter fallen Synchronisierelemente, die sowohl zwei Kameraelektroniken 3a,b zueinander in Gleichtakt bringen, als auch gegebenenfalls weitere Elemente zur Bildverarbeitung takten und/oder Signale generieren, die bei Bedarf auf Videodatenträger (in dieser Anmeldung nicht dargestellt) aufzeichenbar sind.
8 Gemeinsames Objektiv für zwei Kameras, (Fig.2) z.B. in einem Operationsmikroskop.
9 Weiterer geeigneter Hilfs-Schaltkreis zur Unterstützung der Bildanalyse (Fig.6).
10 Signalabstandsdetektor (Fig.6); ist jener elektronische Schaltkreis, der bei virtueller Überlagerung von identischen Objektdetails - aus dem rechten und linken Bildkanal betrachtet - die Abstände zwischen diesen ermittelt. In der Praxis werden diese Abstände immer grösser, je weiter die Objektdetails von der Konvergenzebene 19 entfernt sind. Aus diesen Abständen kann auch auf die zu ziehenden Bereichsgrenzen geschlossen werden, denn ab einer bestimmten Abstandsgrösse treten die eingangs erwähnten physiologischen Probleme auf.
11 Monitor (Fig.1); darunter fallen alle Bilddarstellungsgeräte und Displays, insbesondere Elektronenstrahlröhren mit vorzugsweise geringer Nachleuchtzeit, z.B.. unter 10ms für Schaltungen mit hoher Refreshrate, sowie LCD-Displays usw.
12 Interpolator (Fig.6); darunter fallen Einrichtungen, die aus zwei Bildinformationen eine dritte - gegebenenfalls unter Anwendung nicht-linearer Algorithmen - generieren, die zur Darstellung auf dem Monitor 11 mitverwendet wird. Im Rahmen der Erfindung, auch wenn dies bei den Ausführungsbeispielen nicht ausdrücklich angegeben ist, liegen auch Varianten, bei denen mehrstufig interpoliert wird, z.B. bei denen zuerst aus einem Halbbild zwei zusammengehörende Halbbilder geschaffen werden, indem die Zeilenzwischenräume eines Halbbildes mit interpolierter Bildinformation, vorzugsweise gewonnen aus der Bildinformation der beiden die Zeilenzwischenräume eingrenzenden Zeilen des betreffenden Halbbildes, gefüllt werden, worauf später aus dem daraus gewonnenen Vollbild nach Vergleich mit dem Vollbild des anderen Bildkanales bestimmte Bildsignale wieder umgewandelt oder ausgetastet werden.
13 Konturliniengenerator (Fig.6); nach Erkennung der Grenze zwischen 3-D-Bereich und Austastbereich kann dieser Generator die Grenze mit einer Linie nachziehen.
14 Falschfarbengenerator (Fig.6); färbt bei Bedarf den Bildinhalt des Austastbereiches um.
15 Signalabstandsreduktor (Fig.6); kann rechnerisch die durch den Signalabstandsdetektor 10 gewonnene Abstandsmasse reduzieren, um derart entweder im Austastbereich des einen Teilbildes den Bildinhalt näher an den Bildinhalt des Austastbereiches im anderen Teilbild heranzushiften, oder beide Bildinhalte in beiden Austastbereichen virtuell symmetrisch zueinander zu bewegen, woraus im Extremfall eine 2-D-Darstellung entsteht.
16 Bildkompositor (Fig.6); fügt die Bildinformation für den 3-D-Bereich und für den Austastbereich gegebenenfalls mit der Grenzlinienziehung zusammen, um eine einheitliche Darstellung auf dem Monitor 11 zu ermöglichen.
17 Justiereinrichtung (Fig.6), hier kann eine Bedienperson eingreifen, um die Kriterien, nach der die Bereichsanalyse gemacht wird, zu verändern, z.B. um den Bereich zwischen 20a und 20b zu verändern, oder um die Kriterien, nach denen die Bildanalyse durchgeführt werden soll, zu definieren.
18a,b Optische Achse (Fig.2).
19 Konvergenzebene (Fig.2).
20a,b Nahbereichsgrenzen (Fig.2), die den Nahbereich der Konvergenzebene 19 definieren und somit den 3-D-Darstellungsbereich auf dem Monitor 11 bestimmen.
21a,b Objekt (Fig.2,4,5).
22 Wahlglied (Fig.6); dient dem Justieren und willkürlichen Auswählen nach der gewünschten Abänderungsart, der der Austastbereich unterzogen werden soll.
24 Bildmanipulator (Fig.6). Beliebiger weiterer geeigneter Schaltkreis zur Abänderung des Bildinhaltes des Austastbereiches.

In Fig.1 werden auf einem Monitor 11 die von den Kameras 5a,b aufgenommenen Bilder dargestellt und in mehrere Bereiche mit unterschiedlichen Bilddarstellungen aufgeteilt, wie weiter unten beschrieben wird.

Bei der bevorzugten Variante gemäss Fig.2 werden die dem rechten und linken Auge zugeordneten Bilder eines Stereobildpaares durch zusammengehörende Kameras 5a,b, (Fig.2,5) z.B. entsprechend WO-A-9518511 und WO-A-9518512 aufgezeichnet. Auf die dortigen Ausführungen wird verwiesen. Bevorzugt wird dabei ein gemeinsames Hauptobjektiv 8 verwendet.

Nach herkömmlicher Umwandlung der Videosignale aus den CCD's 2a,b (Fig.3) der Bilderfassungsgeräte 5a,b in der Kameraelektronik 3a,b in digital verarbeitbare Signale werden im Bildrechner 4 (Fig.1) jene Bereiche erfasst, die beispielsweise am Objekt 21a ausserhalb des Nahbereiches 20a-20b (Fig.2) der Konvergenzebene 19, also um die Konvergenzebene 19 herum liegen. In wenigstens einem Teilbild werden diese Bereiche sodann ausgetastet, wie symbolisch in dem Diagramm (Fig.2) des Bildrechners 4 durch xxx angedeutet ist.

Das Diagramm stellt dabei symbolisch einen Bildinhalt (Videosignal) des rechten Kanals SA und ein entsprechendes Videosignal des linken Kanals SB dar. Die Signale (Bildinhalte) sind virtuell übereinander gelegt. Bedingt durch die Konvergenz sind die entsprechenden Bildpunkte von einander beabstandet. Im Bereich des geringsten Abstandes befindet sich die Konvergenzebene. Bis zum strichpunktiert dargestellten Bereich ist z.B. das Auseinanderdriften der Signale physiologisch noch kein Problem. Werden die Abstände jedoch z.B. so gross wie symbolisch unter der Linie dargestellt, kommt es zu den eingangs beschriebenen Problemen. Deshalb wird hier der eine Teilbereich des einen Teilbildes ausgetastet.

Durch dieses Austasten wird an den Monitor 11 aus Fig. 1 ein zweigeteiltes Bildsignal geliefert, wobei die zweigeteilten Bilder der beiden Kanäle via Bildrechner 4 alternierend einem Bildmonitor 11 zugeführt werden. Die Bilder werden dabei insbesondere als Vollbilder mit der doppelten Vertikalablenkungsfrequenz auf dem Bildmonitor 11 dargestellt, gegebenenfalls auch nach Anwendung des in WO-A-9518512 angegebenen Verfahrens zur Erhöhung der Refreshrate durch Interpolation von Halbbildern.

Der am Monitor 11 symbolisch dargestellte helle Bereich (3-D-Bereich) ist jener Bereich, in dem die Darstellung der Szene 3-dimensional erfolgt, während im dunkleren Austastbereich abgewandelte Bildinhalte 2-D dargestellt werden. In Fig.1 sind symbolisch zwei verschiedene Austastbereiche 2-D, 3-D - durch die strichlierte Linie getrennt - dargestellt.

Im linken Austastbereich ist sämtlicher Bildinhalt gelöscht; im rechten findet eine 2-D-Darstellung statt, indem dort nur ein Teilbild des Stereobildpaares abgebildet wird. Daraus ergibt sich gleichzeitig eine für den Betrachter wirksame Helligkeitsreduktion. In den Ansprüchen sind Varianten zu diesem Vorgang beschrieben, die z.T. symbolisch auch unterhalb des Bildrechners angegeben sind: /T bedeutet dabei Austastbereich. Die Signale aus diesen Vorgängen werden dem Monitor 11 zugeführt. Am Objekt 21a (Fig.2) ist der 3-D-Bereich symbolisch durch die Linien 20a,b eingegrenzt. Wie bekannt sind die beiden Kameraelektroniken durch eine Kamerasynchronisation 7 (Fig. 6) synchronisiert.

Die Fig.3 und 4 beziehen sich auf eine weitere symbolische Darstellung eines Objektes 21b, in diesem Fall eines Würfelkreuzes auf einer Kugelkalotte. Die Bildaufnahmeposition der Kameras 5a und 5b ist in Fig.4 ersichtlich, während Fig.3 symbolisch andeutet, wie die Würfel (jeweils 1 Pixel gross) an den beiden CCD's 3a, 3b unterschiedlich abgebildet werden.

Bei einem der erfindungsgemässen Verfahren kann nun der Bildrechner 4 die Unterschiede am Schaltzustand der CCD's 2a,b (Fig.3) untereinander erfassen und daraus die in den Ansprüchen angegebenen Auswertungen und Signalumwandlungen durchführen. Symbolisch ist in Fig.4 noch die virtuelle Kamera 5c dargestellt, die sich bei einem dieser Verfahren scheinbar an den gezeigten Ort positioniert, um dort 2-dimensional jene Bilder aufzunehmen, die dann ausschliesslich im Austastbereich am Monitor 11 dargestellt werden. Der Vorteil bei einem solchen Verfahren liegt darin, dass die Übergänge zwischen 3-D-Bereich und Austastbereich nicht zu abrupt sind, und dass die Darstellung im Austastbereich nicht einseitig aus schräger Sicht abgebildet wird, wie dies der Fall ist, wenn lediglich die Bildinformation im Austastbereich eines Teilbildes ausgetastet wird, jene des anderen Teilbildes jedoch als Bildinformation - sei es nur im Kanal A oder auch in beiden Kanälen - dem Monitor 11 zugeführt wird.

Es wird dem Fachmann klar, dass das erfindungsgemässe Verfahren auch über mehrere Stufen erfolgen kann, indem mehrere Austastbereiche geschaffen werden, je nach Abstand der entsprechenden Bereiche am Objekt 21 von der Konvergenzebene 19. Vergleichbar den Schritten bei der konfokalen Stereomikroskopie kann so eine grundsätzliche Bildverbesserung geschaffen werden, wobei der Betrachter darauf achten muss, dass die Dimensionen und Tiefenverhältnisse im 3-D-Bereich und in den Austastbereichen unterschiedlich sind, was jedoch mit einiger Übung in Kauf genommen werden kann, zumal wenigstens die subtilen Störeffekte - wie eingangs beschrieben - wegfallen.

Zum besseren Verständnis mag auch die Fig.5 dienen, in der eine vergleichbare Situation wie.in Fig.4 dargestellt ist, jedoch ausserdem noch auf die Winkelunterschiede aus Sicht der beiden Kameras beim Betrachten ein und desselben Gegenstandes (Abstände zwischen Würfeln auf einer Kalotte) hingewiesen wird.

Der Bildrechner 4 kann daher beispielsweise auch nach dem Erkennen, welche Bildinformation identische Gegenstände in den beiden Bildkanälen betreffen, anhand der unterschiedlichen Grösse dieser Gegenstände (bzw. deren Messgrössen; hier: Abstände zwischen den Würfeln) ein Mass für den Austastbereich festlegen. Hier ist z.B. symbolisch angedeutet, dass die Bereiche mit einem Winkelunterschied (am CCD sind dies natürlich Pixelabstände) von grösser als 1,5° ausgetastet werden sollten. Im konkreten Fall würden daher im 3-D-Bereich lediglich die jeweils drei Würfel unmittelbar neben dem Zentralwürfel im Zenit am Monitor dargestellt werden, während die übrigen Würfel bereits in den Austastbereich fallen würden.

## Patentansprüche

1. Verfahren zur Darstellung von stereoskopischen Videobildern stereoskopischer Szenen auf einem Monitor (11), wobei jedes stereoskopische Videobild aus wenigstens zwei zusammengehörenden Teilbildern zusammengesetzt ist, von denen jedes Teilbild einem bestimmten von zwei Videokanälen (A,B) zugeordnet ist, **dadurch gekennzeichnet**, dass zuerst die Lage der Konvergenzebene (19) der beiden, den beiden Kanälen (A,B) zugeordneten optischen Strahlengänge (18a,18b) ermittelt wird, worauf jene Detailpunkte des Bildinhaltes ermittelt werden, die weiter als ein bestimmter Abstand zu dieser Konvergenzebene (19) entfernt liegen, wobei dieser Abstand den Nahbereich der Konvergenzebene (19) definiert, worauf die diesen Detailpunkten entsprechenden Videosignale einer Bildverarbeitung unterzogen werden, bei der die an den Monitor (11) weitergegebenen Videosignale wenigstens eines Teilbildes so abgewandelt werden, dass am Monitor gleichzeitig wenigstens zwei unterschiedliche, X-dimensionale Darstellungsbereiche der Videobilder bzw. des Bildinhaltes erscheinen, wobei der eine Darstellungsbereich der Detailpunkte im Nahbereich der Konvergenzebene (19) die gewünschte 3-D-Darstellung umfasst und der als Austastbereich bezeichnete Darstellungsbereich der Detailpunkte außerhalb des Nahbereichs der Konvergenzebene (19) wenigstens eine der folgenden Abwandlungen gegenüber dem nicht abgewandelten 3-D-Bereich aufweist:
- er wird vollständig ausgetastet, wodurch jegliche Darstellung unterdrückt wird;
- er wird durch eine einfarbige, insbesondere strukturlose Flächendarstellung ersetzt;
- er wird in der Leuchtkraft reduziert;
- er wird mit Falschfarben eingefärbt;
- er wird nur 2-dimensional dargestellt.

2. Verfahren nach Anspruch 1, **dadurch gekennzeichnet**, dass im Austastbereich die Bildinformation jeweils nur eines der beiden Teilbilder ausgetastet wird, während der entsprechende Bereich des anderen Teilbildes unverändert dargestellt wird, und/oder daß im Austastbereich die Randschärfe bzw. der Kontrast verbessert oder verschlechtert wird, und/oder daß der Austastbereich durch eine künstlich eingefügte Trennlinie sichtbar vom 3-D-Bereich getrennt wird.

3. Verfahren nach Anspruch 1, **dadurch gekennzeichnet**, dass die Bildinformation des Austastbereiches eines Teilbildes ausgetastet und durch die entsprechende Bildinformation aus dem Austastbereich des anderen Teilbildes ersetzt wird, so dass die Darstellung vollständig 2-dimensional aus dem Blickwinkel nur eines Strahlenganges (18a oder 18b) erfolgt.

4. Verfahren nach einem der vorhergehenden Ansprüche, **dadurch gekennzeichnet**, dass im Bildrechner (4) die Bildinformationen der linken und rechten Teilbilder virtuell übereinander gelegt werden, worauf zwischen korrespondierenden Bilddetailinformationen der beiden Teilbilder der Abstand gemessen wird, worauf nach festgelegten oder durch den Benutzer frei wählbaren Kriterien - in Abhängigkeit von der Grösse dieser Abstände - die Abgrenzung zwischen dem 3-D-Bereich und dem Austastbereich erfolgt.

5. Verfahren nach Anspruch 4, **dadurch gekennzeichnet**, dass die Videosignale für den Austastbereich wenigstens eines der Teilbilder so abgewandelt werden, dass sich der Abstand verringert, worauf diese neuen Videosignale zur Darstellung des Austastbereiches des betreffenden Teilbildes dem Monitor (11) zugeführt werden.

6. Verfahren nach Anspruch 4 oder 5, **dadurch gekennzeichnet**, dass der Abstand durch virtuelles Verschieben der Bildsignale der entsprechenden Bildinhalte sowohl des einen als auch des anderen Teilbildes verringert wird, worauf die abgewandelten Videosignale wieder ihren ursprünglichen Austastbereichen zugeführt werden, um die ursprünglichen Videosignale zu ersetzen.

7. Verfahren nach einem der vorhergehenden Ansprüche, **dadurch gekennzeichnet**, dass aus den Bildinformationen der Austastbereiche der linken und rechten Teilbilder eine dritte, virtuelle Bildinformation interpoliert wird, die einer Betrachtung der Austastbereiche in der Szene durch eine dritte Bilderfassungseinrichtung (5c) entspricht, die in der geometrischen Mitte zwischen den beiden Bilderfassungseinrichtungen (5a,5b) angeordnet wäre, wobei die Videosignale der dritten Bildinformation die Videosignale des Austastbereiches wenigstens eines Teilbildes, vorzugsweise jedoch beider Teilbilder, ersetzen, so dass dort eine reine 2-D-Darstellung aus der Vogelperspektive dargestellt wird.

8. Verfahren nach einem der vorhergehenden Ansprüche, **dadurch gekennzeichnet**, dass am Monitor die Bildinformationen des Austastbereiches 2-dimensional und mit reduzierter Leuchtkraft oder Falschfarbeneinfärbung dargestellt werden, wobei vorzugsweise gleichzeitig - und gegebenenfalls ausblendbar - die Trennlinie zwischen 3-D-Bereich und Austastbereich durch eine farbige Trennlinie dargestellt wird.

9. Verfahren nach einem der vorhergehenden Ansprüche, **dadurch gekennzeichnet**, dass die Bilderfassungseinrichtungen (5a und 5b) automatisch so justiert werden, dass die Fokalebene mit der Konvergenzebene (19) zusammenfällt und die beiden Bereiche durch Abtastung der Darstellungsschärfe an den CCD's (2a und 2b) der Bilderfassungseinrichtungen (5a und 5b) ermittelt werden.

10. Vorrichtung zur Durchführung eines Verfahrens nach einem der vorhergehenden Ansprüche mit Bilderfassungseinrichtungen (5a,b) zur Erzeugung stereoskopischer Videobilder, Kameraelektroniken (3a,b), einer Kamerasynchronisationseinrichtung (7), einem Bildrechner (4) zur Erfassung und Umrechnung der Bildsignale und einem Monitor (11) zur Darstellung der Bildsignale.

11. Vorrichtung nach Anspruch 10, **dadurch gekennzeichnet**, dass sie über Mittel verfügt, die es einem Betrachter ermöglichen, zwischen einzelnen oder Kombinationen mehrerer Verfahrensschritte nach einem der vorhergehenden Ansprüche 1-9 zu variieren.

12. Vorrichtung nach Anspruch 10 oder 11, gekennzeichnet durch Verwendung in einem Videostereomikroskop.

13. Vorrichtung zur Durchführung eines Verfahrens nach einem der Ansprüche 1 bis 9, **dadurch gekennzeichnet**, dass die beiden Bereiche durch den Benutzer wahlweise aus- und einblendbar sind, wobei vorzugsweise auch der 3-D-Bereich mit interpolierter 2-D-lnformation darstellbar ist.

14. Vorrichtung nach Anspruch 13, gekennzeichnet durch die Verwendung in einem Stereomikroskop.

## Claims

1. Method for the showing of stereoscopic video images of stereoscopic scenes on a monitor (11), wherein each stereoscopic video image is composed of at least two partial images, which belong together and of which each partial image is associated with a specific one of two video channels (A, B), characterised thereby, that the position of the convergence plane (19) of the two optical ray paths (18a, 18b), which are associated with the two channels (A, B), is ascertained initially, whereupon those detail points of the image content are ascertained which lie further remote than a certain spacing from this convergence plane (19), wherein this spacing defines the near region of the convergence plane (19), whereupon the video signals corresponding with these detail points are subjected to an image processing, during which those video signals of at least one partial image, which are passed on to the monitor (11), are so modified that at least two different X-dimensional representation regions of the video images or of the image content appear simultaneously at the monitor, wherein the one representation region of the detail points in the near region of the convergence plane (19) comprises the desired 3-D representation and that representation region of the details points outside the near region of the convergence plane (19), which is denoted as blanking region, displays at least one of the following modifications by comparison with the unmodified 3-D region:
- it is blanked out completely, whereby any representation is suppressed,
- it is replaced by a monochrome areal representation, in particular one without structure,
- it is reduced in luminosity,
- it is coloured in false colours and
- it is shown only two-dimensionally.

2. Method according to claim 1, characterised thereby, that the image information of only one of both the partial images is blanked out in the blanking region at any time, whilst the corresponding region of the other partial image is shown unchanged and/or that the border resolution or the contrast is improved or impaired in the blanking region and/or that the blanking region is visibly separated from the three-dimensional region by an artificially inserted separating line.

3. Method according to claim 1, characterised thereby, that the image information of the blanking region of a partial image is blanked out and replaced by the corresponding image information of the blanking region of the other partial image so that the representation takes place completely two-dimensionally from the viewing angle of only one ray path (18a or 18b).

4. Method according to one of the preceding claims, characterised thereby, that the image information data of the left-hand and the right-hand partial images are virtually superimposed one on the other in the image computer (4), whereupon the spacing between corresponding image detail information data of both the partial images is measured, wherein the boundary between the three-dimensional region and the blanking region is fixed in dependence on the magnitude of these spacings and according to fixed criteria or criteria which are freely selectable by the user.

5. Method according to claim 4, characterised thereby, that the video signals for the blanking region of at least one of the partial images are so modified that the spacing is reduced, whereupon these new video signals are fed to the monitor (11) for representation of the blanking region of the partial image concerned.

6. Method according to claim 4 or 5, characterised thereby, that the spacing is reduced by virtual shifting of the image signals of the corresponding image contents of the one as well as also of the other partial image, whereupon the modified video signals are again fed to their original blanking regions in order to replace the original video signals.

7. Method according to one of the preceding claims, characterised thereby, that a third virtual image information, which corresponds with a viewing of the blanking regions in the scene by a third image-detecting equipment (5c), which would be arranged in the geometric centre between both the image-detecting equipments (5a, 5b), is interpolated from the image information data of the blanking regions of the left-hand and the right-hand partial images, wherein the video signals of the third image information data replace the video signals of the blanking region of at least one partial image, preferably however of both the partial images, so that a pure two-dimensional representation from a birdseye view is shown there.

8. Method according to one of the preceding claims, characterised thereby, that the image information data of the blanking region are shown two-dimensionally and with reduced luminosity or false colouration at the monitor, wherein the separating line between the three-dimensional region and the blanking region is shown by a coloured separating line preferably at the same time and in a given case to be capable of being blanked out.

9. Method according to one of the preceding claims, characterised thereby, that the image-detecting equipments (5a, 5b) are automatically so adjusted that the focal plane coincides with the convergence plane (19) and both the regions are ascertained by scanning of the sharpness of representations at the charge-coupled devices (2a and 2b) of the image-detecting equipments (5a, 5b).

10. Device for the performance of a method according to one of the preceding claims with image-detecting equipments (5a, 5b) for the production of stereoscopic video images, electronic camera systems (3a, 3b), a camera-synchronising equipment (7), an image computer (4) for the detection and recomputation of the image signals and a monitor (11) for showing the image signals.

11. Device according to claim 10, characterised thereby, that it comprises means which enable a viewer to change over between individual ones or combinations of several method steps according to one of the preceding claims 1 to 9.

12. Device according to claim 10 or 11, characterised by use in a video stereo-microscope.

13. Device for the performance of a method according to one of the claims 1 to 9, characterised thereby, that the two regions are selectably fadable in and out by the user, wherein preferably also the three-dimensional region is representable with interpolated two-dimensional information.

14. Device according to claim 13, characterised by use in a stereo-microscope.

## Revendications

1. Procédé d'affichage d'images vidéo stéréoscopiques de scènes stéréoscopiques sur un moniteur (11) , où chaque image vidéo stéréoscopique se compose d'au moins deux images partielles correspondantes et à chacune des images partielles est affecté l'un déterminé de deux canaux vidéo (A,B), **caractérisé en ce que** d'abord la position du plan de convergence (19) des deux trajets de rayons optiques affectés aux deux canaux (A,B) est obtenue et ensuite tous les points de détail du contenu de l'image sont obtenus, qui se trouvent plus loin qu'une distance déterminée par rapport à ce point de convergence (19), où cette distance définit la zone d'influence immédiate du plan de convergence (19) , ensuite les signaux vidéo correspondants à ces points de détail sont soumis à un traitement de l'image, dans lequel les signaux vidéo transmis au moniteur (11) d'au moins une image partielle sont transformés de manière qu'apparaissent sur le moniteur, simultanément, au moins deux zones d'affichage différentes dans la dimension X des images vidéo ou, respectivement, du contenu de l'image et l'une, des zones d'affichage contient des points de détail dans la zone d'influence immédiate du plan de convergence (19) contient la représentation 3-D souhaitée et la zone d'affichage désignée comme la zone de suppression des points de détail en dehors de la zone d'influence immédiate du plan de convergence (19) présente au moins l'une des modifications suivantes vis-à-vis de la zone 3-D non modifiée.
- elle est totalement supprimée, ce par quoi chaque affichage est atténué;
- elle est remplacée par une représentation superficielle monochrome, en particulier sans structure;
- son intensité lumineuse est réduite;
- elle est colorée de fausses couleurs;
- elle n'est représentée que bidimensionnellement.

2. Procédé selon la revendication 1, **caractérisé en ce que**, dans la zone de suppression, l'information d'image à chaque fois d'une seule des deux images partielles seulement est supprimée, tandis que la zone correspondante de l'autre image partielle est affichée sans modification et/ou en ce que dans la zone de suppression, l'acuité des bordures ou respectivement le contraste est amélioré ou est rendu plus mauvais et/ou en ce que la zone de suppression est séparée visiblement de la zone 3-D par une ligne de séparation insérée artificielle.

3. Procédé selon la revendication 1, **caractérisé en ce que** l'information d'image de la zone de suppression d'une image partielle est supprimée et est remplacée par l'information d'image correspondante de l'autre zone de suppression de l'autre image partielle, donc l'affichage se produit totalement bidimensionnellement à partir de l'angle de visée d'un seul trajet des rayons (18a ou 18b).

4. Procédé selon l'une des revendications précédentes, **caractérisé en ce que** dans le calculateur d'image (4), les informations d'image des images partielles gauche et droite sont virtuellement placées les unes sur les autres et entre des informations d'images partielles correspondantes des deux images partielles, la distance est mesurée et selon des critères établis ou librement choisis par l'utilisateur dépendant de la grandeur de ces distances, il se produit la délimitation entre la zone 3-D et la zone de suppression.

5. Procédé selon la revendication 4, **caractérisé en ce que** les signaux vidéo pour la zone de suppression d'au moins l'une des images partielles sont transformés de façon que la distance diminue et ces nouveaux signaux vidéo sont conduits pour l'affichage de la zone de suppression de l'image partielle correspondante au moniteur (11).

6. Procédé selon la revendication 4 ou 5, **caractérisé en ce que** la distance est diminuée par déplacement virtuel des signaux d'image du contenu de l'image correspondante, aussi bien de l'une que de l'autre des images partielles, et les signaux vidéo transformés sont de nouveau conduits à leurs zones de suppression d'origine pour remplacer les signaux vidéo d'origine.

7. Procédé selon l'une des revendications précédentes, **caractérisé en ce qu'**à partir des informations d'image des zones de suppression des images partielles gauche et droite est interpolée une troisième information d'image virtuelle qui correspond à une observation de la zone de suppression dans la scène par un troisième dispositif d'acquisition de l'image (5c) qui serait agencé au milieu géométrique entre les deux dispositifs d'acquisition de l'image (5a,5b) et les signaux vidéo de la troisième information d'image remplacent les signaux vidéo de la zone de suppression d'au moins une image partielle, avantageusement, cependant, des deux images partielles de façon que là soit affiché un affichage bidimensionnel pur à partir de la vue à vol d'oiseau.

8. Procédé selon l'une des revendications précédentes, **caractérisé en ce que** sur le moniteur sont affichées les informations d'image de la zone de suppression bidimensionnellement et avec intensité lumineuse réduite ou bien fausse coloration et avantageusement simultanément ou, le cas échéant, de façon diaphragmable, la ligne de séparation entre la zone tridimensionnelle et la zone de suppression est représentée par une ligne de séparation colorée.

9. Procédé selon l'une des revendications précédentes **caractérisé en ce que** les dispositifs d'acquisition de l'image (5a et 5b) sont ajustés automatiquement de manière que le plan focal corresponde au plan de convergence (19) et les deux zones sont obtenues par suppression de l'acuité de l'affichage aux CCD (2a et 2b) des dispositifs d'acquisition de l'image (5a et 5b).

10. Dispositif pour la mise en oeuvre d'un procédé selon l'une des revendications précédentes avec dispositifs d'acquisition de l'image (5a,b) pour la production d'images vidéo stéréoscopiques, électroniques de caméra (3a,b), un système de synchronisation de la caméra (7), un calculateur de l'image (4) pour l'acquisition et la transformation des signaux d'image et un moniteur (11) pour l'affichage des signaux d'image.

11. Dispositif selon la revendication 10, caractérisé en ce qu'il dispose de moyens qui permettent à un observateur de varier entre plusieurs étapes de procédé individuelles ou en combinaison, selon l'une des revendications 1-9 qui précèdent.

12. Dispositif selon la revendication 10 ou 11, caractérisé par l'utilisation dans un microscope vidéo stéréoscopique.

13. Dispositif pour la mise en oeuvre d'un procédé selon l'une des revendications 1 à 9, **caractérisé en ce que** les deux zones peuvent être diaphragmées au choix par l'utilisateur et, avantageusement, la zone tridimensionnelle peut être affichée avec l'information bidimensionnelle interpolée.

14. Dispositif selon la revendication 13, caractérisé par l'utilisation dans un microscope stéréocopique.
